# EUROPEAN PATENT SPECIFICATION

(11) **EP 3 502 499 B1**
(45) Date of publication and mention of the grant of the patent: **17.03.2021**
(21) Application number: 18214950.0
(22) Date of filing: 20.12.2018
(51) Int. Cl.: F16C 32/06, F16C 17/04, F16C 33/10, F16C 17/02, F01D 25/22, F16N 17/02, F04D 29/041, F04D 29/047

(54) **FUEL LUBRICATED FOIL BEARING**
KRAFTSTOFFGESCHMIERTES FOLIENLAGER
PALIER À FEUILLE LUBRIFIÉ AU CARBURANT

(30) Priority: 21.12.2017 US 201715850611
(43) Date of publication of application: 26.06.2019
(73) Proprietor: United Technologies Corporation, Farmington, CT 06032 (US)
(72) Inventor: MORRIS, Robert J., Portland, CT 06480 (US)
(74) Representative: Dehns

(56) References cited:
- EP-A2- 1 780 387
- WO-A1-2014/105325
- US-A- 5 209 652
- US-A- 5 938 341
- US-A1- 2004 096 130

## Description

### BACKGROUND

Engines, such as those which power aircraft and industrial equipment, may employ a compressor to compress air that is drawn into the engine and a turbine to capture energy associated with the combustion of a fuel-air mixture. Bearings are used in an engine to interface a first (e.g., static) structure and a second (e.g., movable) structure.

Hydrodynamic bearings are well known and have been used effectively as supports for rotating machinery, including high speed applications. The term hydrodynamic bearing, as used herein, defines a class of fluid-film bearings which has its surfaces separated by a thin layer of either liquid or gas, the film being established and the pressure generated therein by the relative motion between the bearing surfaces. This is distinguished from bearings of the hydrostatic type which require a feed of pressurized fluid from an external source. Various embodiments of hydrodynamic bearings are disclosed in the U.S. patent number 4,247,155.

In many applications, oil is used as a lubricating fluid for a bearing. An oil system typically includes tanks, pumps, heat exchangers/coolers, deaerators, and other components to support the lubrication of bearings with oil. U.S. patent application publication number 2014/0076661 describes and illustrates various lubrication systems and components that may be used.

The components of an oil lubrication system represent a penalty in terms of, e.g., the complexity/cost that they add to the engine. Additionally, the components serve as a potential source of unreliability of the engine, e.g., one or more of the components may become inoperable. Additionally, the components contribute weight to the engine; this additional weight may lead to inefficiencies in some applications (e.g., aerospace applications).

In some applications, a gas (e.g., air) is used as a lubricating fluid for a bearing. The use of a gas as the lubricating fluid is a cleaner, more environmentally-friendly implementation relative to oil. However, gases have a lower viscosity than oil such that for the same working fluid pressure, gas-lubricated bearings will have a lower/reduced load capacity relative to oil-lubricated bearings. This lower load capacity may make the use of gas-lubricated bearings impractical in some applications.

WO 2014/105325 A1 discloses a prior art system according to the preamble of claim 1. US 2004/096130 A1 discloses another prior art system.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

According to the present invention, there is provided a system for an engine as set forth in claim 1. In some embodiments, the second structure is rotatable relative to the first structure. In some embodiments, the first structure includes a case of the engine, and the second structure includes a shaft of the engine. In some embodiments, the system further comprises a plurality of spring pads coupled to the first structure, where the spring pads are disposed between the first structure and the membrane.

There is also provided an engine as set forth in claim 6. In some embodiments, the engine is free of oil. In some embodiments, the combustor section includes at least one fuel nozzle that supplies the liquid fuel included in the mixture. In some embodiments, the engine further comprises a fuel tank, and a fuel pump that receives liquid fuel from the fuel tank and supplies the received liquid fuel to the at least one fuel nozzle and the bearing assembly.

### BRIEF DESCRIPTION OF THE DRAWINGS

The present disclosure is illustrated by way of example and not limited in the accompanying figures in which like reference numerals indicate similar elements. The figures are not necessarily drawn to scale unless explicitly indicated otherwise.
FIG. 1 is a side cutaway illustration of an axial flow turbojet engine.
FIG. 1A is a side cutaway illustration of a centrifugal/radial flow turbojet engine.
FIG. 2 illustrates an axial bearing assembly in accordance with this disclosure.
FIG. 2A illustrates a radial bearing assembly in accordance with this disclosure.
FIGS. 3 and 3A illustrate fuel systems in accordance with this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems, and methods are described for applying a lubricant to one or more bearings of an engine. In some embodiments, the lubricant includes a fuel that is combusted by the engine.

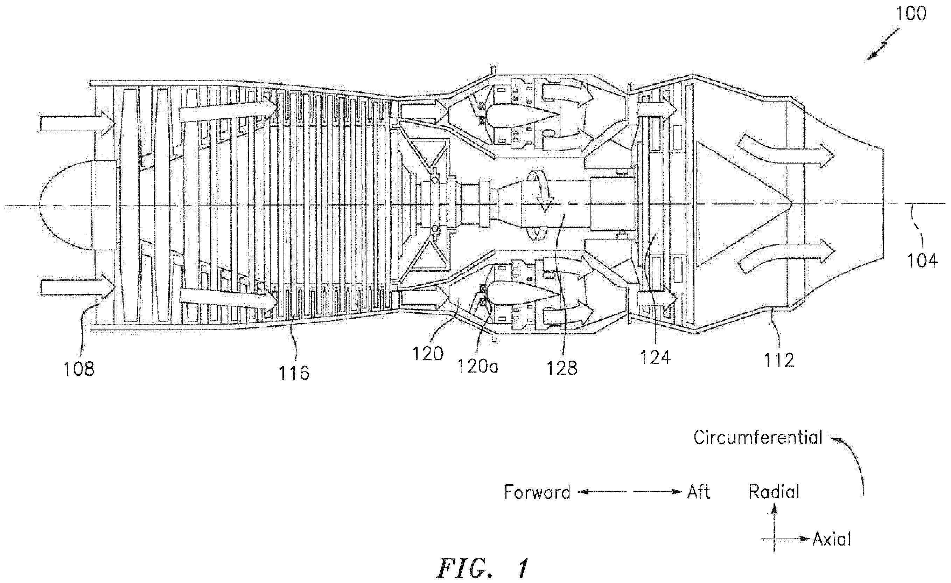

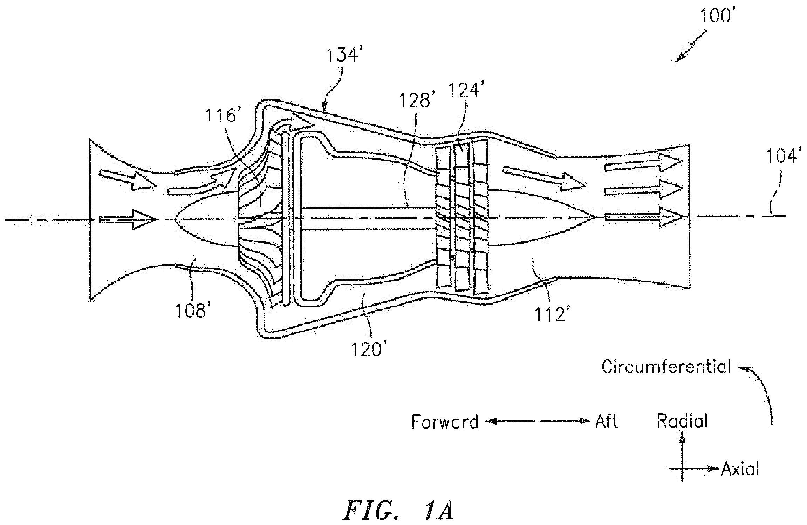

Aspects of the disclosure may be applied in connection with an engine. FIG. 1 is a side cutaway illustration of an axial flow turbojet engine 100. The engine 100 may extend along a longitudinal axial centerline 104 between an upstream/forward airflow inlet 108 and a downstream/aft airflow exhaust nozzle 112. The engine 100 may include a compressor section 116, a combustor section 120, and a turbine section 124.

During operation, air may enter the engine 100 through the inlet 108 where it may be compressed by the compressor section 116. The compressed air may be provided to the combustor section 120. In the combustor section 120, the compressed air may be mixed with fuel provided by one or more fuel nozzles 120a and ignited to power the engine 100. The output of the combustor section 120 may be provided to the turbine section 124. The turbine section 124 may extract energy from the output of the combustor section 120 to drive the compressor section 116 via a rotation of a shaft 128 that couples (e.g., mechanically couples) the compressor section 116 and the turbine section 124. The combusted fuel-air mixture may be exhausted via the nozzle 112.

FIG. 1A is a side cutaway illustration of centrifugal/radial flow turbojet engine 100'. The engine 100' may include an inlet 108', a compressor section 116', a combustor section 120', a turbine section 124', and an exhaust nozzle 112'. The engine 100' (and its associated sections/devices/components) may be similar to the engine 100. The engine 100' may differ from the engine 100 in that the compressor section 116' may direct the incoming airflow through the inlet 108' in a circumferential direction and/or in a radial (outboard) direction (relative to the engine centerline/axis 104'). This airflow may be redirected by, e.g., an engine case 134' downstream of the compressor section 116' so as to be more parallel to the axis 104'.

FIGS. 1 and 1A represent possible configurations for an engine. Aspects of the disclosure may be applied in connection with other environments, including additional configurations for engines. For example, aspects of the disclosure may be applied in connection with turbofan engines, turboprops, turboshafts, etc.

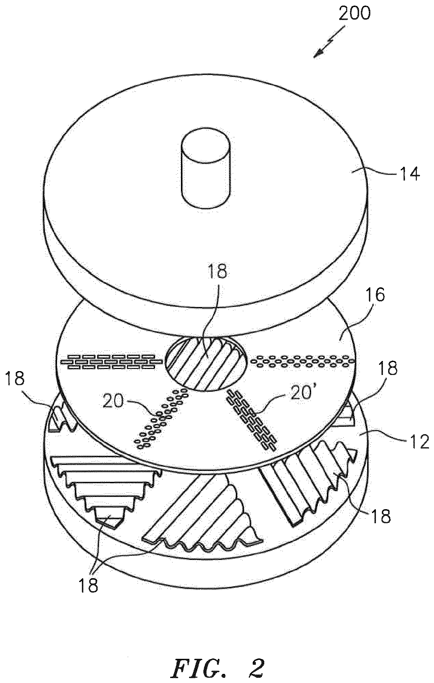

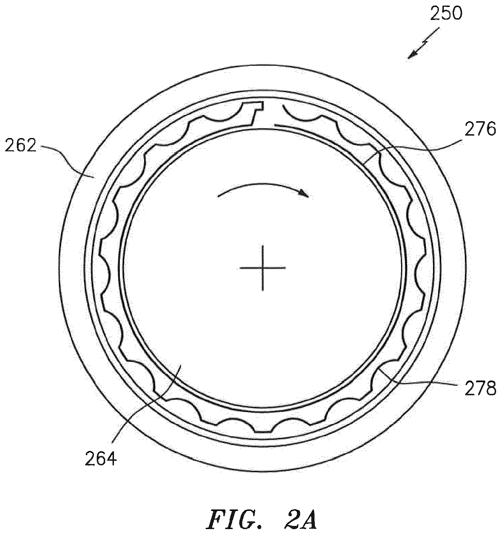

Hardware of an engine may be supported by one or more bearings/bearing assemblies. For example, FIG. 2 illustrates an embodiment of a bearing assembly 200 in accordance with aspects of this disclosure. The bearing assembly 200 includes a first structure 12 and a second structure 14. The second structure 14 is movable (e.g., rotatable) relative to the first structure 12. The first structure 12 may be a stationary structure. In some embodiments, the first structure 12 may include a housing/case (e.g., the case 134' of FIG. 1A). In some embodiments, the second structure 14 may include a shaft (e.g., the shaft 128/128' of FIG. 1/1A).

The bearing assembly 200 includes a compliant foil membrane 16 supported by one or more resilient spring pads 18. The spring pads 18 may be coupled to the first structure 12, such that the spring pads 18 are disposed between the first structure 12 and the foil membrane 16. The foil membrane 16 may include one or more thin, foil-like sheets of metal (or other suitable material) that are compliant, i.e., a sheet of metal whose thickness relative to its lateral dimensions is sufficiently small to allow local bending/deflection.

As shown, the foil membrane 16 includes perforations 20. The perforations 20 may be arrayed in one or more lines as shown in FIG. 2. The perforations 20 may extend across some, or even an entirety of, a dimension of the foil membrane 16. The perforations 20 may accommodate a load during engine operation. For example, the perforations 20 may represent relative weakness in the foil membrane 16 to accommodate a deflection of the second structure 14 relative to the first structure 12 during engine operation.

The perforations 20 provide a passageway through which fluid may flow uniformly to an area/region between the foil 16 and movable member 14 in order to increase (e.g., maximize) pressure maintenance by efficiently replacing any fluid that may be displaced/circulated. The perforations 20 may be positioned above the space between successive spring pads 18 to enable a deflection of the foil membrane 16 and an unobstructed flow of fluid through the perforations 20. The spring pads 18 may provide the foil membrane 16 with resilient support.

FIG. 2A illustrates a bearing assembly 250 in accordance with aspects of this disclosure. The bearing assembly 250 includes a first structure 262 and a second structure 264. The second structure 264 is movable (e.g., rotatable) relative to the first structure 262. The first structure 262 may be a stationary structure. In some embodiments, the first structure 262 may include a housing/case (e.g., a bearing housing). In some embodiments, the second structure 264 may include a shaft/journal.

Disposed between the first structure 262 and the second structure 264 is a foil structure/membrane. In particular, the foil membrane may include a first (e.g., top) foil 276 and a second foil 278. The second foil 278, which may be referred to as a bump foil, may provide a compliant support structure for the bearing assembly 250. For example, the second foil 278 may accommodate a deflection of the second structure 264 relative to the first structure 262. The foil membrane provides fluid (e.g., liquid fuel) in an area/region between the foil membrane and the second structure 264 via, e.g., one or more perforations (e.g., perforations 20 of FIG. 2).

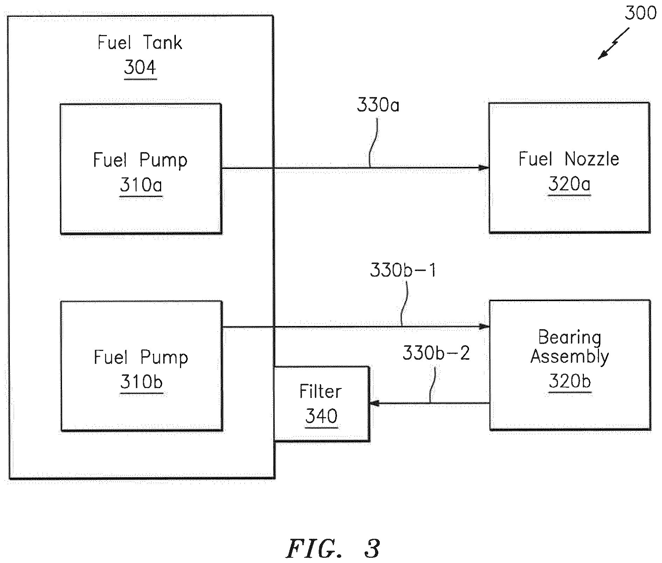

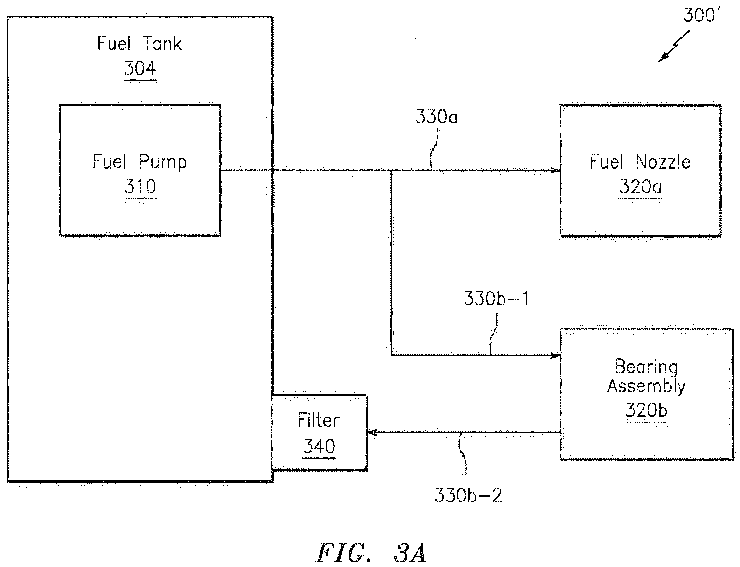

Referring to FIG. 3, a fuel system 300 is shown. The system 300 includes a fuel tank 304. The fuel tank 304 may serve as a reservoir/storage of fuel (e.g., liquid fuel). The fuel tank includes a first fuel pump 310a and a second fuel pump 310b. While the fuel pumps 310a and 310b are shown as being included in the fuel tank 304, one or both of the pumps 310a and 310b may be separate components (relative to the fuel tank 304) in some embodiments.

The first fuel pump 310a provides fuel to one or more fuel nozzles, such as for example a fuel nozzle 320a, via one or more fuel pipes/channels 330a. The fuel nozzle 320a may correspond to the fuel nozzle 120a of FIG. 1. The fuel nozzle 320a, which may be included in a combustor section of an engine (e.g., combustor section 120/120' of FIG. 1/1A), may provide fuel that it receives from the first fuel pump 310a for purposes of combustion.

The second fuel pump 310b provides fuel to a bearing assembly 320b via one or more fuel channels 330b-1. The bearing assembly 320b may correspond to the bearing assembly 200 of FIG. 2 or the bearing assembly 250 of FIG. 2A. The fuel provided by the fuel pump 310b to the bearing assembly 320b via the channel 330b-1 may be used to form a film of fuel between two or more components of the bearing assembly 320b (e.g., between the foil membrane 16 and the second structure 14 of FIG. 2; in FIG. 2A between one or both of the first foil 276 and the second foil 278 on the one hand and the second structure 264 on the other hand). A closed loop/circuit is formed between the fuel tank 304 and the bearing assembly 320b, such that the fuel that is supplied via the channel 330b-1 may be returned to the fuel tank 304 and/or the second fuel pump 310b via a return channel 330b-2. One or more filters 340 may be included to filter the fuel that is conveyed via the return channel 330b-2 prior to (re)introducing the fuel to, e.g., the fuel tank 304.

As shown in FIG. 3, the system 300 may provide separate channels/lanes in terms of fuel used by the fuel nozzle 320a relative to fuel used by the bearing assembly 320b. Such separation may be useful for purposes of reliability, maintenance (e.g., trouble-shooting), etc., due to the segregation/isolation that is obtained.

FIG. 3A illustrates an embodiment of a system 300' that at least partially combines the lanes. For example, the channels 330a and 330b-1 may be combined in the system 300'. For example, in the system 300' fuel provided to the bearing assembly 320b via the channel 330b-1 may be obtained from the channel 330a (e.g., the channel 330b-1 may be tapped from the channel 330a, and the channel 330a may be connected to a fuel pump 310). Whereas FIG. 3 illustrates the use of two fuel pumps 310a and 310b, in FIG. 3A a single fuel pump 310 may be used. Relative to the system 300, the system 300' may be lighter (e.g., may weigh less) due to the inclusion of less fuel pumps and/or a sharing of lane/channel resources.

The system 300 and/or the system 300' may be included as part of an engine (e.g., the engine 100/100' of FIG. 1/1A).

Aspects of the disclosure utilizes fuel (e.g., liquid fuel) as a lubricating fluid for a bearing (e.g., a foil bearing). The use of fuel as the lubricating fluid may reduce (or even completely eliminate) components that are used in a conventional lubrication system (e.g., a conventional oil lubrication system). For example, in some embodiments an engine might not include oil; e.g., the engine may be free of oil. Furthermore, the use of fuel as a lubricating fluid may leverage existing hardware (e.g., fuel pumps, fuel tanks, fuel channels, etc.), thereby promoting efficiency (e.g., reducing weight). The use of fuel as a lubricating fluid may increase a load capacity relative to the use of, e.g., air as a lubricating fluid, thereby enabling a larger load (e.g., larger engine hardware) to be accommodated/supported.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A system (300; 300') for an engine (100; 100'), comprising:
a fuel tank (304);
at least one pump (310a, 310b) configured to provide liquid fuel from the fuel tank (304) to a nozzle (120a; 320a) of a combustion section (116; 116') of the engine (100; 100'); and
a bearing assembly (200; 250; 320b) that includes:
a first structure (12; 262); and
a second structure (14; 264) that is movable relative to the first structure (12; 262);
**characterised in that**:
the bearing assembly (200; 250; 320b) includes a membrane (16; 276, 278) disposed between the first structure (12; 262) and the second structure (14; 264), wherein the membrane (16; 276, 278) includes a plurality of perforations (20) that receive liquid fuel from the at least one pump (310a, 310b) and supply the received liquid fuel in a region between the membrane (16; 276, 278) and the second structure (14; 264);
the at least one pump (310a, 310b) includes a first pump (310a) and a second pump (310b), wherein the first pump (310a) is configured to provide liquid fuel from the fuel tank (304) to the nozzle (120a; 320a) via a first channel (330a), and wherein the second pump (310b) is configured to provide liquid fuel from the fuel tank (304) to the bearing assembly (200; 250; 320b) via a second channel (330b-1); and
a closed circuit is formed between the fuel tank (304) and the bearing assembly (320b) and is configured to return the liquid fuel that is supplied via the channel (330b-1) to the fuel tank (304) via a return channel (330b-2).

2. The system (300; 300') of claim 1, wherein the closed circuit is configured to return the liquid fuel to the fuel tank (304) via a filter (340) coupled to the fuel tank (304).

3. The system (300; 300') of claim 1 or 2, wherein the second structure (14; 264) is rotatable relative to the first structure (12; 262).

4. The system (300; 300') of any preceding claim, wherein the first structure (12; 262) includes a case (134') of the engine (100; 100'), and wherein the second structure (14; 264) includes a shaft (128; 128') of the engine (100; 100').

5. The system (300; 300') of any preceding claim, further comprising:
a plurality of spring pads (18) coupled to the first structure (12), wherein the spring pads (18) are disposed between the first structure (12) and the membrane (16).

6. An engine (100; 100') comprising:
a case (134');
a shaft (128; 128');
an inlet (108; 108');
a compressor section (116; 116') that compresses air received at the inlet (108; 108');
a combustor section (120; 120') that combusts a mixture of compressed air provided by the compressor section (116; 116') and liquid fuel, the combustor section (120; 120') includes at least one fuel nozzle (120a; 320a) that supplies the liquid fuel included in the mixture;
a turbine section (124; 124') that extracts energy from combusted mixture to drive the compressor section (116; 116') via a rotation of the shaft (128; 128'), where the shaft (128; 128') couples the compressor section (116; 116') and the turbine section (124; 124'); and
the system of claim 1, wherein the first structure (12; 262) includes the case (134') of the engine (100; 100'), the second structure (14; 264) includes the shaft (128; 128') of the engine (100, 100'), and the bearing assembly (200; 252; 320b) supports the shaft (128; 128').

7. The engine (100; 100') of claim 6, wherein the engine (100; 100') is free of oil.

## Patentansprüche

1. System (300; 300') für einen Motor (100; 100'), umfassend:
einen Kraftstofftank (304);
mindestens eine Pumpe (310a, 310b), die dazu konfiguriert ist, einem Verbrennungsabschnitt (116; 116') des Motors (100; 100') flüssigen Kraftstoff aus dem Kraftstofftank (304) einer Düse (120a; 320a) bereitzustellen; und
eine Lageranordnung (200; 250; 320b), die Folgendes beinhaltet:
eine erste Struktur (12; 262); und
eine zweite Struktur (14; 264), die relativ zu der ersten Struktur (12; 262) beweglich ist;
**dadurch gekennzeichnet, dass**:
die Lageranordnung (200; 250; 320b) eine Membran (16; 276, 278) beinhaltet, die zwischen der ersten Struktur (12; 262) und der zweiten Struktur (14; 264) angeordnet ist, wobei die Membran (16; 276, 278) eine Vielzahl von Perforationen (20) beinhaltet, die flüssigen Kraftstoff von der mindestens einen Pumpe (310a, 310b) aufnehmen und den aufgenommenen flüssigen Kraftstoff in einem Bereich zwischen der Membran (16; 276, 278) und der zweiten Struktur (14; 264) zuführen;
die mindestens eine Pumpe (310a, 310b) eine erste Pumpe (310a) und eine zweite Pumpe (310b) umfasst, wobei die erste Pumpe (310a) dazu konfiguriert ist, der Düse (120a; 320a) über einen ersten Kanal (330a) flüssigen Kraftstoff von dem Kraftstofftank (304) bereitzustellen, und wobei die zweite Pumpe (310b) dazu konfiguriert ist, der Lageranordnung (200; 250; 320b) über einen zweiten Kanal (330b-1) flüssigen Kraftstoff aus dem Kraftstofftank (304) bereitzustellen; und
ein geschlossener Kreislauf zwischen dem Kraftstofftank (304) und der Lageranordnung (320b) gebildet ist und dazu konfiguriert ist, den flüssigen Kraftstoff, der über den Kanal (330b-1) zugeführt wird, über einen Rückführungskanal (330b-2) zu dem Kraftstofftank (304) zurückzuführen.

2. System (300; 300') nach Anspruch 1, wobei der geschlossene Kreislauf, dazu konfiguriert ist, den flüssigen Kraftstoff über ein Filter (340), der mit dem Kraftstofftank (304) gekoppelt ist, zu dem Kraftstofftank (304) zurückzuführen.

3. System (300; 300') nach Anspruch 1 oder 2, wobei die zweite Struktur (14; 264) relativ zu der ersten Struktur (12; 262) drehbar ist.

4. System (300; 300') nach einem vorhergehenden Anspruch, wobei die erste Struktur (12; 262) ein Gehäuse (134') des Motors (100; 100') beinhaltet, und wobei die zweite Struktur (14; 264) eine Welle (128; 128') des Motors (100; 100') beinhaltet.

5. System (300; 300') eines vorhergehenden Anspruchs, ferner umfassend:
eine Vielzahl von Federunterlagen (18), die mit der ersten Struktur (12) gekoppelt sind, wobei die Federunterlagen (18) zwischen der ersten Struktur (12) und der Membran (16) angeordnet sind.

6. Motor (100; 100'), umfassend:
ein Gehäuse (134');
eine Welle (128; 128');
einen Einlauf (108; 108');
einen Verdichterabschnitt (116; 116'), der die am Einlauf (108; 108') aufgenommene Luft verdichtet;
einen Brennkammerabschnitt (120; 120'), der ein Gemisch aus Druckluft, die von dem Verdichterabschnitt (116; 116') bereitgestellt wird, und flüssigem Kraftstoff verbrennt, wobei der Brennkammerabschnitt (120; 120') mindestens eine Düse (120a; 320a) beinhaltet, die den flüssigen Kraftstoff zuführt, der in dem Gemisch beinhaltet ist;
einen Turbinenabschnitt (124; 124'), der dem verbrannten Gemisch Energie entzieht, um den Verdichterabschnitt (116; 116') über eine Drehung der Welle (128; 128') anzutreiben, wobei die Welle (128; 128') den Verdichterabschnitt (116; 116') und den Turbinenabschnitt (124; 124') koppelt; und
das System nach Anspruch 1, wobei die erste Struktur (12; 262) das Gehäuse (134') des Motors (100; 100') beinhaltet, die zweite Struktur (14; 264) die Welle (128; 128') des Motors (100, 100') beinhaltet und die Lageranordnung (200; 252; 320b), die Welle (128; 128') trägt.

7. Motor (100; 100') nach Anspruch 6, wobei der Motor (100; 100') ölfrei ist.

## Revendications

1. Système (300 ; 300') pour un moteur (100 ; 100'), comprenant :
un réservoir de carburant (304) ;
au moins une pompe (310a, 310b) configurée pour fournir du carburant liquide du réservoir de carburant (304) à une buse (120a ; 320a) d'une section de combustion (116 ; 116') du moteur (100 ; 100'); et
un ensemble palier (200 ; 250 ; 320b) qui comporte :
une première structure (12 ; 262) ; et
une seconde structure (14 ; 264) qui est mobile par rapport à la première structure (12 ; 262) ;
**caractérisé en ce que** :
l'ensemble palier (200 ; 250 ; 320b) comporte une membrane (16 ; 276, 278) disposée entre la première structure (12 ; 262) et la seconde structure (14 ; 264), dans lequel la membrane (16 ; 276, 278) comporte une pluralité de perforations (20) qui reçoivent du carburant liquide de l'au moins une pompe (310a, 310b) et fournissent le carburant liquide reçu dans une région entre la membrane (16 ; 276, 278) et la seconde structure (14 ; 264) ;
l'au moins une pompe (310a, 310b) comporte une première pompe (310a) et une seconde pompe (310b), dans lequel la première pompe (310a) est configurée pour fournir du carburant liquide du réservoir de carburant (304) à la buse (120a ; 320a) par l'intermédiaire d'un premier canal (330a), et dans lequel la seconde pompe (310b) est configurée pour fournir du carburant liquide du réservoir de carburant (304) à l'ensemble palier (200; 250; 320b) par l'intermédiaire d'un second canal (330b-1) ; et
un circuit fermé est formé entre le réservoir de carburant (304) et l'ensemble palier (320b) et est configuré pour renvoyer le carburant liquide qui est fourni par l'intermédiaire du canal (330b-1) vers le réservoir de carburant (304) par l'intermédiaire d'un canal de retour (330b-2).

2. Système (300 ; 300') selon la revendication 1, dans lequel le circuit fermé est configuré pour renvoyer le carburant liquide vers le réservoir de carburant (304) par l'intermédiaire d'un filtre (340) couplé au réservoir de carburant (304).

3. Système (300 ; 300') selon la revendication 1 ou 2, dans lequel la seconde structure (14 ; 264) peut tourner par rapport à la première (12 ; 262).

4. Système (300 ; 300') selon une quelconque revendication précédente, dans lequel la première structure (12 ; 262) comporte un boîtier (134') du moteur (100 ; 100'), et dans lequel la seconde structure (14 ; 264) comporte un arbre (128 ; 128') du moteur (100 ; 100').

5. Système (300 ; 300') selon une quelconque revendication précédente, comprenant en outre :
une pluralité de patins à ressort (18) couplés à la première structure (12), dans lequel les patins à ressort (18) sont disposés entre la première structure (12) et la membrane (16).

6. Moteur (100 ; 100') comprenant :
un boîtier (134') ;
un arbre (128 ; 128') ;
une entrée (108 ; 108') ;
une section de compresseur (116 ; 116') qui comprime l'air reçu à l'entrée (108 ; 108') ;
une section de chambre de combustion (120 ; 120') qui brûle un mélange d'air comprimé fourni par la section de compresseur (116 ; 116') et de carburant liquide, la section de chambre de combustion (120 ; 120') comporte au moins une buse de carburant (120a ; 320a) qui fournit le carburant liquide inclus dans le mélange ;
une section de turbine (124 ; 124') qui extrait l'énergie du mélange brûlé pour entraîner la section de compresseur (116 ; 116') par l'intermédiaire d'une rotation de l'arbre (128 ; 128'), où l'arbre (128 ; 128') couple la section de compresseur (116 ; 116') et la section de turbine (124 ; 124') ; et
le système selon la revendication 1, dans lequel la première structure (12 ; 262) comporte le boîtier (134') du moteur (100 ; 100'), la seconde structure (14 ; 264) comporte l'arbre (128 ; 128') du moteur (100, 100') et l'ensemble palier (200 ; 252 ; 320b) supporte l'arbre (128 ; 128').

7. Moteur (100 ; 100') selon la revendication 6, dans lequel le moteur (100 ; 100') est exempt d'huile.
